# FASCICULE DE BREVET EUROPEEN

(11) **EP 3 201 680 B1**
(45) Date de publication et mention de la délivrance du brevet: **01.05.2019**
(21) Numéro de dépôt: 15788141.8
(22) Date de dépôt: 02.10.2015
(51) Int. Cl.: G02B 27/01, B60R 11/02

(54) **AFFICHEUR TÊTE HAUTE À RÉGLAGE FIN SANS JEU**
HEAD-UP-ANZEIGE MIT SPIELFREIER FEINEINSTELLUNG
HEAD-UP DISPLAY HAVING FINE ADJUSTMENT WITHOUT PLAY

(30) Priorité: 03.10.2014 FR 1402253
(43) Date de publication de la demande: 09.08.2017
(73) Titulaire: Valeo Systemes Thermiques, 78320 Le Mesnil Saint Denis (FR)
(72) Inventeur: BERAUD, Henry, F-78320 Le Mesnil Saint Denis (FR)
(74) Mandataire: Delplanque, Arnaud
(86) Numéro de dépôt international: PCT/FR2015/052658
(87) Numéro de publication internationale: WO 2016/051117

(56) Documents cités:
- FR-A1- 2 983 314
- US-A1- 2013 100 535
- US-A1- 2013 235 454

## Description

Le domaine de la présente invention est celui de l'automobile et, plus particulièrement, celui des équipements d'assistance au conducteur.

Les véhicules automobiles modernes disposent d'aides à la conduite pour faciliter la connaissance qu'a le conducteur de son environnement. Parmi ceux-ci on trouve les afficheurs tête haute, ou HUD en anglais (pour head-up display), qui permettent de donner une information visuelle au conducteur sans que celui-ci ait à accommoder sa vision pour passer d'une lecture de loin, sur la route, à une vision de près, sur le tableau de bord. Pour cela ces dispositifs comportent une vitre semi-réfléchissante et semi-transparente qui est placée devant le conducteur et sur laquelle sont envoyées, par réflexion sur le semi-miroir, les informations en question, comme à l'aide d'un imageur. La formation de ces images projetées est collimatée en avant du véhicule, à une distance correspondant à la distance courante d'observation de l'extérieur par le conducteur. Celui-ci peut ainsi voir son environnement à travers la vitre du fait de sa transparence, tout en lisant sur celle-ci les informations fournies, du fait de son caractère réfléchissant.

Cette vitre, dénommée couramment par les hommes du métier sous le terme anglais de "combiner" (ou combinateur, pour son action de combinaison de deux images) est généralement positionnée en bas du pare-brise. Elle doit être réglable en hauteur ce qui se traduit par une inclinaison variable, dans le plan vertical d'avancement du véhicule, pour que les images puissent être renvoyées vers l'oeil du conducteur quelle que soit la taille de celui-ci. Dans des modèles de moyenne ou de haut de gamme la vitre est mue par un moteur électrique qui l'incline pour ce réglage et qui, bien souvent, l'escamote en la refermant après utilisation. Il permet entre autres de régler son inclinaison quand elle est en position ouverte.

Le document US 2013/0100535 divulgue un combinateur et un dispositif de réglage selon l'art antérieur.

Dans des modèles à moindre prix, qui ne comportent pas de moteur de repliage, il est envisageable d'adjoindre à l'afficheur tête haute, un moyen manuel de réglage de l'inclinaison, qui fonctionne à partir d'une molette accessible par le conducteur. La rotation de la mollette entraîne celle de la vitre par un enchaînement de pièces engrenant les unes sur les autres, en assurant une nécessaire démultiplication entre la mollette et la vitre dans le but d'assurer une certaine finesse au réglage. L'inclinaison de la vitre doit en effet être très précise, une toute petite variation de l'angle de réglage de celle-ci entraînant un déplacement rapide de la hauteur de l'image virtuelle créée. Il faut donc disposer d'un système de réglage très fin, sans jeu, et qui ne soit pas sensible aux vibrations.

Par ailleurs, pour limiter les coûts, il est souhaitable de réaliser les éléments de commande de l'inclinaison de la vitre dans une matière bon marché, comme par exemple une matière plastique. Mais il convient de prévoir une stabilité dans le temps pour le réglage défini par le conducteur et notamment, de prévoir sa capacité à résister aux soubresauts ou cahots lors de l'utilisation du véhicule. Une solution consisterait à tirer parti des matériaux plastiques pour éliminer le jeu entre les diverses pièces en assurant simplement une pression des engrenages existant entre eux. Cette solution résisterait aux vibrations et éviterait les problèmes d'hystérésis lors de la rotation de la mollette, grâce à l'absence de jeu, mais elle ne serait pas fonctionnelle, la déformation des engrenages qui en résulte empêchant ou rendant difficile leur rotation, Et il faut aussi considérer les tolérances importantes de fabrication et les dilatations en températures de ces matériaux injectés.

Il convient donc de définir un dispositif capable de régler l'inclinaison d'une vitre semi-transparente d'afficheur tête haute, qui soit suffisamment stable pour résister aux sollicitations en vibrations, qui ne présente pas de jeu dans sa chaîne de positionnement et qui soit peu onéreux.

A cet effet, l'invention a pour objet un dispositif de réglage de l'inclinaison de la vitre semi-transparente d'un afficheur tête haute, comprenant une mollette entraînant, dans sa rotation, un bras d'actionnement de ladite vitre mobile autour d'un premier axe de rotation, caractérisé en ce que ledit dispositif comprend en outre un levier mobile en rotation autour d'un second axe de rotation, ledit levier comprenant deux parties s'étendant radialement depuis ledit second axe de rotation, chacune de ces deux parties coopérant sous contrainte mécanique respectivement avec la mollette et avec ledit bras d'actionnement pour transmettre la rotation de ladite mollette audit bras, lesdites deux parties comportant au moins une zone souple permettant l'ajustement de leur géométrie sous l'effet de ladite contrainte.

La mise sous contrainte du levier entre la mollette et le bras d'actionnement permet d'éliminer les jeux entre les divers moyens d'entraînement de la vitre semi-transparente et de rendre l'inclinaison de celle-ci plus stable dans le temps et plus facile à définir par le conducteur. Par ailleurs la zone souple autorise, en supprimant les risques de matage ou de déformation de ces moyens d'entraînement, notamment ceux en forme de dentures épicycloïdales, la réalisation de ces derniers en des matériaux plastiques peu onéreux. Avantageusement ledit second axe de rotation est sensiblement parallèle audit premier axe de rotation. La transmission des mouvements en rotation est ainsi plus facile à mettre en oeuvre.

De façon également avantageuse ladite zone souple se situe à l'extrémité longitudinale de chacune des deux parties.

De façon préférentielle l'ajustement de la géométrie s'effectue par une réduction de la longueur des deux parties.

Avantageusement la rotation de la vitre semi-transparente est démultipliée par rapport à celle de la mollette.

Préférentiellement les deux parties dudit levier sont des secteurs s'étendant à partir dudit second axe de rotation.

Dans un mode particulier de réalisation lesdites extrémités longitudinales des deux secteurs sont des première et seconde faces dentées, sensiblement cylindriques, coopérant avec des faces cylindriques dentées correspondantes positionnées respectivement sur la mollette et sur l'extrémité dudit bras située du côté opposé à la vitre semi-transparente. Cette configuration, d'une part, assure la démultiplication et le sens correct pour l'entrainement à partir de la molette, et, d'autre part, améliore la précision et la stabilité du réglage donné à l'inclinaison de la vitre semi-transparente, en retenant une coopération par des engrenages. La compression des dents les unes contre elles garantit l'absence de jeu dans l'engrenage correspondant.

Avantageusement au moins un des secteurs du levier comporte une entaille traversante s'étendant à partir d'un des côtés dudit secteur, sensiblement transversalement par rapport à l'axe médian dudit secteur. Cette entaille crée une souplesse longitudinale pour ce secteur, ce qui permet d'adapter sa longueur et de réduire la pression imposée par la contrainte longitudinale sur les pièces constitutives du dispositif de réglage.

De façon préférentielle les deux secteurs comportent, chacun, au moins une entaille traversante s'étendant à partir d'un des côtés dudit secteur.

De façon plus préférentielle chacun des deux secteurs comporte au moins deux entailles traversantes, les deux entailles d'un même secteur s'étendant à partir d'un côté différent et s'étendant en direction du côté opposé.

De façon encore plus préférentielle les deux entailles d'un même secteur présentent une forme symétrique l'une de l'autre par rapport à l'axe médian du secteur correspondant. La disposition antagoniste des deux entailles permet un déplacement en translation qui reste parallèle à la longueur radiale du secteur denté. Il y a lieu, pour cela, d'adapter et d'optimiser les formes géométriques pour favoriser cette double bascule équilibrée, sans risque de pivotement pendant les manoeuvres lentes et modérées du réglage. Préférentiellement la- ou lesdites entailles s'étendent à partir d'un des côtés dudit secteur jusqu'à dépasser l'axe médian correspondant. Cette longueur de l'entaille garantit une bonne flexibilité donnée à l'extrémité du secteur.

L'invention porte également sur un afficheur tête haute comprenant une vitre semi-transparente dont l'inclinaison est réglable par un dispositif de réglage tel que décrit ci-dessus.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue générique d'un afficheur tête haute à bas coût comportant une mollette de réglage ;
- la figure 2 est une vue en perspective d'un dispositif de réglage de l'inclinaison de la vitre de l'afficheur de la figure 1 ;
- la figure 3 est une vue de côté d'un dispositif de réglage de l'inclinaison de la vitre d'un afficheur tête haute, selon un mode de réalisation de l'invention, et
- la figure 4 est une vue de détail, montrant le levier intermédiaire du dispositif de réglage de la figure 3.

Dans la suite de la description les termes avant et arrière sont définis en référence au sens d'avancement du véhicule.

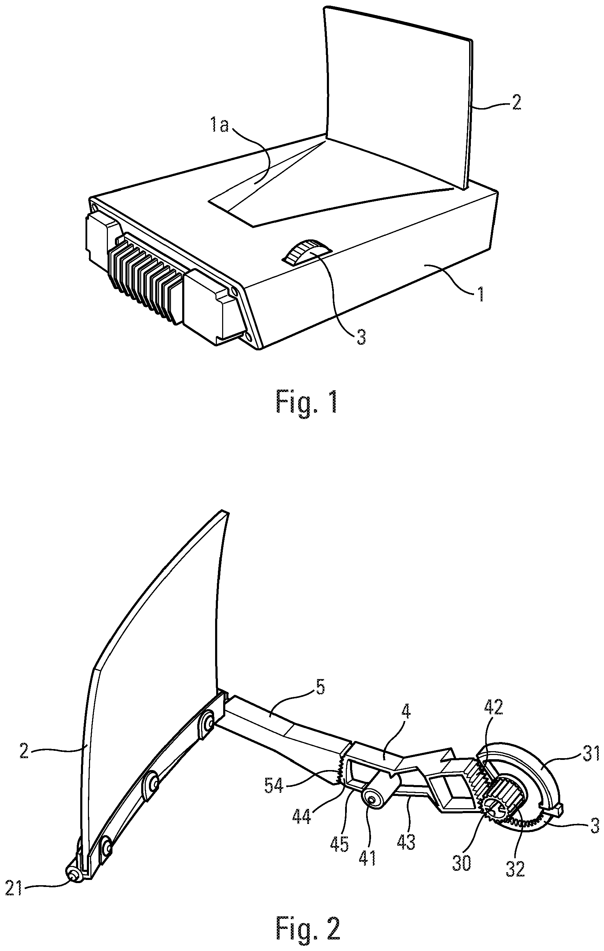

En se référant à la figure 1, on voit un afficheur tête haute pour un véhicule automobile d'entrée de gamme ou de gamme intermédiaire. Il comporte un boîtier 1, par exemple sensiblement parallélépipédique, destiné à être placé en partie haute du tableau de bord du véhicule. Sur sa face arrière sont illustrés divers moyens de commande mis à la disposition du conducteur (qui ne sont pas décrits ici) et un radiateur qui est nécessaire au refroidissement de l'imageur. Sa face avant porte une vitre semi-transparente 2, par exemple en forme de secteur sphérique ou parabolique, qui est apte à réfléchir vers les yeux du conducteur, comme le ferait un miroir, des rayons lumineux en provenance d'une source lumineuse sensiblement ponctuelle qui forme une petite image éclairée inversée. Le dessus de ce boîtier est, par exemple, creusé par une découpe 1a en forme de soufflet s'ouvrant vers l'arrière, qui a pour objet de laisser passer les rayons venant de la source lumineuse (non représentée) qui est située au fond de cette découpe. L'imageur reçoit des informations d'assistance à la conduite qui sont élaborées par un calculateur de bord et il met celles-ci en forme au sein d'une image qui se réfléchit sur la vitre semi-transparente 2 pour informer le conducteur, grâce au caractère semi-réfléchissant de celle-ci. A côté de ce soufflet est disposée une mollette de réglage 3, qui est facilement accessible par le conducteur et, pour cela, positionnée vers l'arrière du boîtier. La rotation de cette mollette 3, dans un sens ou dans l'autre, entraîne une rotation dans le même sens de la vitre semi-transparente 2 et permet, ainsi, en réglant l'inclinaison de ladite vitre, d'adapter le dispositif à la taille du conducteur et, en particulier, à la hauteur de ses yeux.

La figure 2 montre un exemple de dispositif de réglage de l'inclinaison de la vitre semi-transparente 2 à partir de la mollette de réglage 3. Ce dispositif est décrit, sur cette figure, de façon générique et ne comporte par les caractéristiques spécifiques de l'invention. Dans cette configuration, la mollette 3 est dentée sur sa face extérieure et elle engrène sur un levier libre en rotation autour d'un axe transversal. Ce levier engrène lui-même sur une face cylindrique dentée associée à la vitre. La rotation de la molette, dans un sens ou dans l'autre, fait tourner le levier qui engendre une rotation de la vitre, elle aussi autour d'un axe transversal. Pour obtenir une précision fine dans l'inclinaison de la vitre il convient de prévoir une démultiplication importante de l'angle de rotation de la mollette par rapport à la vitre.

La mollette 3 comporte une roue externe 31 dont un secteur est strié ou antidérapant pour servir de moyen d'actionnement pour le conducteur, et qui est destiné à dépasser verticalement du boîtier 1 ; elle comporte également une roue centrale dentée 32, de plus petit diamètre, qui s'étend à côté de la roue externe 31 selon le même axe de rotation 30. La différence des diamètres entre la roue externe et la roue centrale est calibrée pour fournir un premier moyen de démultiplication entre l'action en rotation du conducteur sur la mollette 3 et la réponse en variation d'inclinaison de la vitre semi-transparente 2.

La roue centrale 32 engrène sur une face cylindrique dentée d'un levier de commande 4 qui transmet la rotation de la mollette 3 à un bras d'actionnement 5, qui est rigidement attaché à la vitre semi-transparente 2 et qui fait tourner celle-ci autour de son axe de rotation 21.

Le levier 4 est composé de deux parties formant sensiblement des secteurs angulaires, qui s'étendent de part et d'autre d'un axe de rotation 41 positionné parallèlement mais à distance de l'axe de rotation 30 de la mollette 3. Un premier secteur 43 s'étend de l'axe de rotation 41 vers la mollette 3 et se termine par une première face dentée 42, sensiblement cylindrique, dont les génératrices sont parallèles à l'axe de rotation 41 et dont les dents coopèrent avec celles de la roue centrale 32 de la mollette. Le second secteur 45, qui est plus court que le premier, s'étend dans la direction opposée, depuis l'axe de rotation 41 en direction du bras d'actionnement 5 ; il se termine, de même, par une seconde face dentée 44, sensiblement cylindrique, qui coopère avec une face cylindrique dentée correspondante, portée par ce bras d'actionnement. On constate que, du fait de cette double coopération de faces dentées, une rotation dans un sens de la mollette 3 génère une rotation, dans le même sens, de la vitre semi-transparente 2, ce qui facilite le pilotage de l'inclinaison de cette vitre par le conducteur. Par ailleurs la différence de rayons entre les deux secteurs permet, à nouveau, de générer une démultiplication de la rotation entre la mollette 3 et la vitre semi-transparente 2.

Le bras d'actionnement 5 est positionné en extrémité du levier 4 ; il est sensiblement rectiligne et se termine, lui aussi, par une face cylindrique dentée 54. A son extrémité opposée au levier 4 le bras d'actionnement est rigidement fixé à la vitre semi-transparente 2 au niveau de son axe de rotation 21. Il forme ainsi un bras de levier pour l'actionnement de la rotation de la vitre semi-transparente 2 par le levier 4. Sa longueur est définie, d'une part, de façon à positionner la mollette 3 le plus prêt possible de la face arrière du boîtier 1, pour que celle-ci soit facilement accessible par le conducteur, et, d'autre part, de façon à obtenir, en liaison avec les dispositifs précédents, la démultiplication recherchée entre la rotation de la mollette 3 et la variation d'inclinaison de la vitre semi-transparente 2.

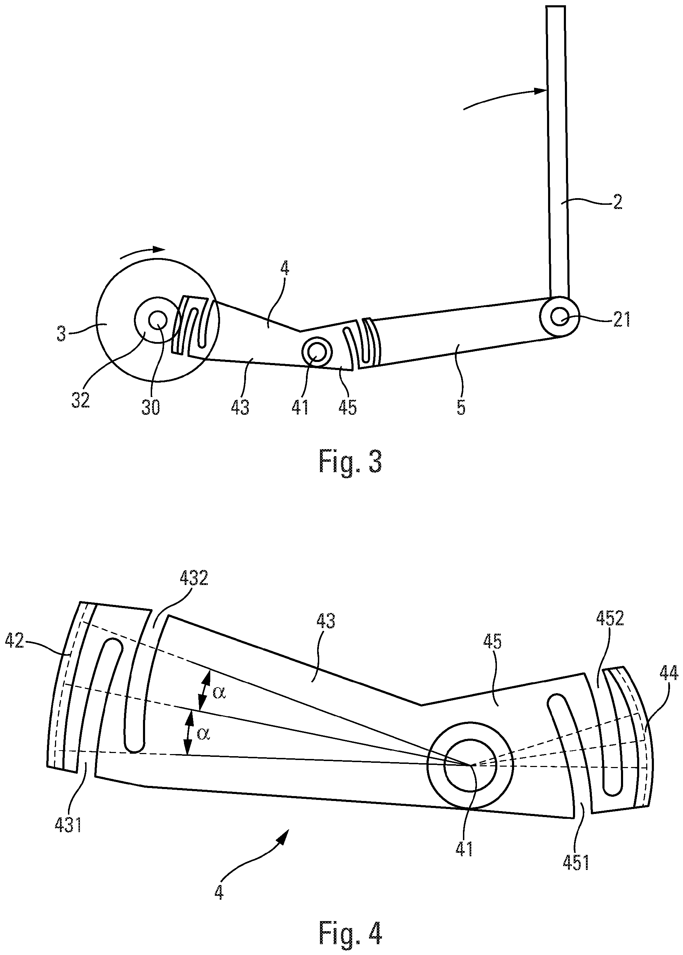

La figure 3 montre le même type de dispositif de réglage de l'inclinaison d'une vitre semi-transparente, mais avec un levier 4 selon l'invention. De même que précédemment la mollette 3 comporte une roue centrale de faible diamètre 32 qui engrène sur la première face sensiblement cylindrique dentée 42 du premier secteur 43, qui est mobile en rotation autour de l'axe de rotation 41 du levier 4. Ledit axe de rotation 41 du levier 4 est sensiblement parallèle à l'axe de rotation 30 de la mollette. Le second secteur 45 a un rayon plus court que celui du premier secteur 43 et la seconde face sensiblement cylindrique dentée 44 engrène sur la face cylindrique dentée 54 du bras d'actionnement 5.

Le levier 4 selon l'invention est illustré de façon plus détaillée sur la figure 4.

L'extrémité de chacun des deux secteurs du levier 4, en amont de leurs faces cylindriques dentées 42 et 44, est découpée par deux entailles traversantes, c'est-à-dire qui traversent l'épaisseur du secteur de part en part, et qui débouchent, chacune, sur un de leurs côtés longitudinaux. Ainsi le premier secteur 43 comporte une première entaille 431, proche de la première face cylindrique dentée 42, qui part de son côté inférieur pour découper le secteur sur la presque totalité de sa hauteur, en laissant toutefois, en haut, une hauteur résiduelle pour que le secteur conserve une intégrité mécanique. Il comporte également une seconde entaille 432 qui part de son côté supérieur pour le découper sur la presque totalité de sa hauteur, en laissant en bas, comme précédemment, une hauteur résiduelle apte à conserver l'intégrité mécanique. Cette seconde entaille 432 est positionnée proche de la première 431, du côté de l'extrémité longitudinale du premier secteur 43.

Le second secteur 45 comporte, lui aussi, deux entailles, une première entaille 451 et une seconde entaille 452, qui s'étendent depuis le bord inférieur, respectivement le bord supérieur, pour le découper sur la presque totalité de sa hauteur, en laissant une hauteur résiduelle en bas, respectivement en haut, de façon à lui conserver son intégrité mécanique. Ces deux entailles sont, là encore, positionnées à proximité l'une de l'autre et à proximité de l'extrémité longitudinale de ce second secteur 45.

Compte tenu de cette paire d'entailles à l'extrémité de chacun des secteurs, ceux-ci présentent une flexibilité longitudinale et les première et seconde faces cylindriques dentées 42, 44, peuvent, sous un effort de compression, se rapprocher de l'axe de rotation 41. Cette flexibilité évite les déformations qui pourraient se produire, notamment sur les dents des pièces en matière plastique, et permet d'assurer la fonction d'engrenage des face cylindriques dentées 42 et 44 du levier 4, sur les faces cylindriques dentées 32, respectivement, 54, de la mollette 3 et du bras d'actionnement 5.

On remarque que les deux entailles de chaque secteur ont des longueurs égales ce qui permet de conserver une orientation pour la face cylindrique dentée correspondante 42, respectivement 44, qui reste perpendiculaire à l'axe médian du secteur, quelle que soit la compression qui lui est appliquée. Par ailleurs, l'écart angulaire α (de préférence de l'ordre de 9°) que fait le fond de l'entaille avec l'axe médian du secteur est le même pour les deux entailles d'un même secteur. Du fait de ces deux caractéristiques, la coopération de ces faces cylindriques avec celle de la mollette 3, respectivement avec celle du bras d'actionnement 5, n'est pas perturbée par cette compression.

On va maintenant décrire le fonctionnement du dispositif de réglage de l'inclinaison d'une vitre semi-transparente selon l'invention.

Le dimensionnement et le positionnement des divers éléments constituant le dispositif de réglage sont tels qu'une contrainte de compression est appliquée au niveau de chacun des engrenages participant au dispositif. Ainsi l'entraxe entre la mollette 3 et l'axe de rotation 41 du levier 4 est légèrement inférieur à la somme des rayons de la roue centrale 32 et de la première face cylindrique dentée 42 du premier secteur 43 du levier 4. De même, l'entraxe entre l'axe de rotation 41 du levier 4 et l'axe de rotation 21 de la vitre semi-transparente 2, est légèrement inférieur à la somme des rayons de la seconde face cylindrique dentée 44 du second secteur 45 du levier 4 et du bras d'actionnement 5. On crée ainsi une légère compression au niveau des engrenages formés par les roues et faces cylindriques dentées précédentes. Cette compression ne se traduit pas, comme on aurait pu le craindre, par une déformation des dents du fait du matériau plastique retenu, ce qui aurait pour effet d'empêcher la rotation des engrenages, mais par une rétractation de l'extrémité des deux secteurs du levier 4 en direction de l'axe de rotation de celui-ci, grâce à la flexibilité apportée par les deux entailles situées à ces extrémités. La rétractation visée pour un tel dispositif reste relativement modeste, de l'ordre de quelques dixièmes de millimètres, ce qui est suffisant pour éviter les pertes de contact entre les dents mais qui n'est pas excessif de façon à éviter des efforts trop importants d'actionnement de la mollette 3.

La compression qui est appliquée aux dents des deux faces cylindriques dentées les maintient en appui les unes contre les autres, ce qui élimine les risques de désengagement qui pourraient, par exemple, venir des soubresauts de la route, et qui provoqueraient des rotations parasites avec, pour conséquence, un tremblotement des images qui sont renvoyées par la vitre semi-transparente 2. Et comme les deux faces cylindriques dentées 42 et 44, aux extrémités des deux secteurs 43 et 45 du levier 4, se déplacent dans la direction de l'axe médian du levier elles restent parallèles à leur orientation d'origine et ne se déforment pas ; la permanence de la liberté de mouvement en rotation des engrenages est assurée.

Le présent dispositif a été décrit en mettant en oeuvre des faces cylindriques dentées qui coopèrent entre elles au sein d'engrenages ; il est bien évident que l'invention peut être réalisée avec d'autres moyens pour l'entraînement d'une face cylindrique par une autre, comme par exemple des pistes lisses recouvertes d'un matériau antidérapant.

## Revendications

1. Dispositif de réglage de l'inclinaison de la vitre semi-transparente (2) d'un afficheur tête haute, comprenant :
- une mollette (3) entraînant, dans sa rotation,
un bras d'actionnement (5) de ladite vitre mobile autour d'un premier axe de rotation (21), **caractérisé en ce que** ledit dispositif comprend en outre,
- un levier (4) mobile en rotation autour d'un second axe de rotation (41), ledit levier comprenant deux parties (43, 45) s'étendant radialement depuis ledit second axe de rotation, chacune de ces deux parties coopérant sous contrainte mécanique respectivement avec la mollette (3) et avec ledit bras d'actionnement (5) pour transmettre la rotation de ladite mollette audit bras, lesdites deux parties comportant au moins une zone souple (42, 44) permettant l'ajustement de leur géométrie sous l'effet de ladite contrainte.

2. Dispositif selon la revendication 1 dans lequel ledit second axe de rotation (41) est sensiblement parallèle audit premier axe de rotation (21).

3. Dispositif selon l'une des revendications 1 ou 2 dans lequel ladite zone souple se situe à l'extrémité longitudinale (42, 44) de chacune des deux parties.

4. Dispositif selon l'une des revendications 1 à 3 dans lequel l'ajustement de la géométrie s'effectue par une réduction de la longueur des deux parties (43, 45).

5. Dispositif selon l'une des revendications 1 à 4 dans lequel la rotation de la vitre semi-transparente est démultipliée par rapport à celle de la mollette (3).

6. Dispositif selon l'une des revendications 1 à 5 dans lequel les deux parties (43, 45) dudit levier (4) sont des secteurs s'étendant à partir dudit second axe de rotation (41).

7. Dispositif selon la revendication 6 dans lequel les extrémités longitudinales (42, 44) des deux secteurs sont des première et seconde faces dentées (42, 44), sensiblement cylindriques, coopérant avec des faces dentées (32, 54) correspondantes positionnées respectivement sur la mollette (3) et sur l'extrémité dudit bras (5) située du côté opposé à la vitre semi-transparente (2).

8. Dispositif selon l'une des revendications 6 ou 7 dans lequel au moins un des secteurs (43, 45) du levier (4) comporte au moins une entaille traversante (431, 432, 451, 452) s'étendant à partir d'un des côtés dudit secteur, sensiblement transversalement par rapport à l'axe médian dudit secteur.

9. Dispositif selon la revendication 8 dans lequel les deux secteurs comportent, chacun, au moins une entaille traversante s'étendant à partir d'un des côtés dudit secteur.

10. Dispositif selon la revendication 9 dans lequel chacun des deux secteurs comporte au moins deux entailles traversantes, les deux entailles d'un même secteur s'étendant à partir d'un côté différent et s'étendant en direction du côté opposé.

11. Dispositif selon la revendication 10 dans lequel les deux entailles d'un même secteur présentent une forme symétrique l'une de l'autre par rapport à l'axe médian du secteur correspondant.

12. Dispositif selon l'une des revendications 8 à 11 dans lequel la- ou lesdites entailles s'étendent à partir d'un des côtés dudit secteur, jusqu'à dépasser l'axe médian correspondant.

13. Afficheur tête haute comprenant une vitre semi-transparente (2) dont l'inclinaison est réglable par un dispositif de réglage selon l'une des revendications précédentes.

## Patentansprüche

1. Vorrichtung zur Einstellung der Neigung der halbtransparenten Scheibe (2) einer Head-Up-Anzeige, umfassend:
- ein Rädchen (3), das in seiner Drehung einen Betätigungsarm (5) der Scheibe abtreibt, die um eine erste Drehachse (21) herum beweglich ist, **dadurch gekennzeichnet, dass** die Vorrichtung ferner Folgendes umfasst:
- einen Hebel (4), der um eine zweite Drehachse (41) herum drehbeweglich ist, der Hebel umfassend zwei Abschnitte (43, 45), die sich radial von der zweiten Drehachse erstrecken, wobei jeder dieser zwei Abschnitte unter mechanischer Beanspruchung jeweils mit dem Rädchen (3) und mit dem Betätigungsarm (5) zusammenwirkt, um die Drehung des Rädchens auf den Arm zu übertragen, wobei die zwei Abschnitte mindestens einen weichen Bereich (42, 44) umfassen, der die Einstellung ihrer Geometrie unter der Wirkung der Beanspruchung erlaubt.

2. Vorrichtung nach Anspruch 1, wobei die zweite Drehachse (41) im Wesentlichen parallel zur ersten Drehachse (21) verläuft.

3. Vorrichtung nach einem der Ansprüche 1 oder 2, wobei sich der weiche Bereich am Längsende (42, 44) jeder der zwei Abschnitte befindet.

4. Vorrichtung nach einem der Ansprüche 1 bis 3, wobei die Einstellung der Geometrie durch eine Verringerung der Länge der zwei Abschnitte (43, 45) erfolgt.

5. Vorrichtung nach einem der Ansprüche 1 bis 4, wobei die Drehung der halbtransparenten Scheibe im Verhältnis zu jener des Rädchens (3) untersetzt ist.

6. Vorrichtung nach einem der Ansprüche 1 bis 5, wobei die zwei Abschnitte (43, 45) des Hebels (4) Sektoren sind, die sich von der zweiten Drehachse (41) erstrecken.

7. Vorrichtung nach Anspruch 6, wobei die Längsenden (42, 44) der zwei Sektoren eine erste und eine zweite gezahnte Fläche (42, 44) sind, die im Wesentlichen zylindrisch sind, die mit entsprechenden gezahnten Flächen (32, 54) zusammenwirken, die jeweils auf dem Rädchen (3) und am Ende des Arms (5) positioniert sind, das sich auf der gegenüberliegenden Seite der halbtransparenten Scheibe (2) befindet.

8. Vorrichtung nach einem der Ansprüche 6 oder 7, wobei mindestens einer der Sektoren (43, 45) des Hebels (4) mindestens eine quer verlaufende Kerbe (431, 432, 451, 452) aufweist, die sich von einer der Seiten des Sektors im Wesentlichen quer zur Mittelachse des Sektors erstreckt.

9. Vorrichtung nach Anspruch 8, wobei die zwei Sektoren jeweils mindestens eine quer verlaufende Kerbe aufweisen, die sich von einer der Seiten des Sektors erstreckt.

10. Vorrichtung nach Anspruch 9, wobei jeder der zwei Sektoren mindestens zwei quer verlaufende Kerben aufweist, wobei sich die zwei Kerben eines selben Sektors von einer unterschiedlichen Seite erstrecken und sich in Richtung der gegenüberliegenden Seite erstrecken.

11. Vorrichtung nach Anspruch 10, wobei die zwei Kerben eines selben Sektors eine zueinander symmetrische Form bezogen auf die Mittelachse des entsprechenden Sektors aufweisen.

12. Vorrichtung nach einem der Ansprüche 8 bis 11, wobei sich die Kerbe(n) von einer der Seiten des Sektors bis zum Übertreten der entsprechenden Mittelachse erstrecken.

13. Head-Up-Anzeige, umfassend eine halbtransparente Scheibe (2), deren Neigung durch eine Vorrichtung zur Einstellung nach einem der vorhergehenden Ansprüche einstellbar ist.

## Claims

1. Device for adjusting the inclination of the semi-transparent glass sheet (2) of a head-up display, comprising:
- a thumbwheel (3) which, when rotated, drives an actuating arm (5) of said movable glass sheet about a first axis of rotation (21),
**characterized in that** said device also comprises
- a lever (4) that is rotatable about a second axis of rotation (41), said lever comprising two parts (43, 45) that extend radially from said second axis of rotation, each of these two parts cooperating under mechanical stress with the thumbwheel (3) and with said actuating arm (5), respectively, in order to transmit the rotation of said thumbwheel to said arm, said two parts having at least one flexible region (42, 44) for altering their geometry under the effect of said stress.

2. Device according to Claim 1, wherein said second axis of rotation (41) is substantially parallel to said first axis of rotation (21).

3. Device according to either of Claims 1 and 2, wherein said flexible region is situated at the longitudinal end (42, 44) of each of the two parts.

4. Device according to one of Claims 1 to 3, wherein the geometry is altered by a reduction in the length of the two parts (43, 45) .

5. Device according to one of Claims 1 to 4, wherein the rotation of the semi-transparent glass sheet is geared down compared with that of the thumbwheel (3).

6. Device according to one of Claims 1 to 5, wherein the two parts (43, 45) of said lever (4) are sectors that extend from said second axis of rotation (41).

7. Device according to Claim 6, wherein the longitudinal ends (42, 44) of the two sectors are substantially cylindrical first and second toothed faces (42, 44) that cooperate with corresponding toothed faces (32, 54) positioned on the thumbwheel (3) and on that end of said arm (5) that is situated on the opposite side from the semi-transparent glass sheet (2), respectively.

8. Device according to either of Claims 6 and 7, wherein at least one of the sectors (43, 45) of the lever (4) has at least one through-notch (431, 432, 451, 452) extending from one of the sides of said sector, substantially transversely with respect to the median axis of said sector.

9. Device according to Claim 8, wherein the two sectors each have at least one through-notch extending from one of the sides of said sector.

10. Device according to Claim 9, wherein each of the two sectors has at least two through-notches, the two notches of one and the same sector extending from a different side and extending in the direction of the opposite side.

11. Device according to Claim 10, wherein the two notches of one and the same sector have a symmetric shape with respect to one another about the median axis of the corresponding sector.

12. Device according to one of Claims 8 to 11, wherein said notch(es) extend(s) from one of the sides of said sector to beyond the corresponding median axis.

13. Head-up display comprising a semi-transparent glass sheet (2), the inclination of which is adjustable by an adjustment device according to one of the preceding claims.
